# EUROPÄISCHE PATENTSCHRIFT

(11) **EP 3 198 197 B1**
(45) Veröffentlichungstag und Bekanntmachung des Hinweises auf die Patenterteilung: **11.03.2020**
(21) Anmeldenummer: 15794453.9
(22) Anmeldetag: 02.09.2015
(51) Int. Cl.: F23J 11/04, F23J 11/08, F24H 1/06

(54) **HEIZGERÄT-ABGASROHRANORDNUNG MIT INTEGRIERTEM SCHALLDÄMPFER UND HERSTELLUNGSVERFAHREN DAFÜR**
HEATING DEVICE EXHAUST GAS ARRANGEMENT WITH INTEGRATED SOUND SUPPRESSOR AND METHOD FOR PRODUCING SAME
ENSEMBLE TUYAU D'ÉCHAPPEMENT D'APPAREIL DE CHAUFFAGE COMPRENANT UN SILENCIEUX INTÉGRÉ ET PROCÉDÉ DE PRODUCTION DUDIT ENSEMBLE

(30) Priorität: 27.09.2014 DE 102014114060
(43) Veröffentlichungstag der Anmeldung: 02.08.2017
(73) Patentinhaber: Webasto SE, 82131 Stockdorf (DE)
(72) Erfinder: AHNSJÖ, Mattias, 82131 Stockdorf (DE); WILD, Saskia, 82131 Stockdorf (DE); POUSSE, Jean-Etienne, 82131 Stockdorf (DE)
(74) Vertreter: Ciesla, Bettina
(86) Internationale Anmeldenummer: PCT/DE2015/100368
(87) Internationale Veröffentlichungsnummer: WO 2016/045661

(56) Entgegenhaltungen:
- WO-A1-2012/149537
- DE-A1-102011 051 057
- JP-A- S59 155 528
- US-A- 5 909 916

## Beschreibung

Die vorliegende Erfindung betrifft eine Heizgerät-Abgasrohranordnung mit integriertem Schalldämpfer, ein mobiles, brennstoffbetriebenes Heizgerät mit einer solchen Heizgerät-Abgasrohranordnung und ein Verfahren zum Herstellen einer Heizgerät-Abgasrohranordnung.

In mobilen Heizgeräten, die mit Brennstoff betrieben werden, wie sie insbesondere in Standheizungen oder Zusatzheizungen in Fahrzeugen zum Einsatz kommen, werden üblicherweise Brenneranordnungen eingesetzt, in denen der Brennstoff mit zugeführter Brennluft in einer Brennkammer unter Freisetzung von Wärme umgesetzt wird. Die Umsetzung erfolgt dabei üblicherweise in einer flammenden Verbrennung, wobei allerdings grundsätzlich auch eine teil- oder vollkatalytische Umsetzung möglich ist. Die bei der Verbrennung entstehenden heißen Abgase werden üblicherweise durch einen Wärmetauscher geleitet, um einen möglichst großen Teil der freigesetzten Wärme auf ein zu erwärmendes Medium zu übertragen, und anschließend über eine Abgasleitung abgeführt.

Unter einem "mobilen Heizgerät" wird im vorliegenden Kontext ein Heizgerät verstanden, das für den Einsatz in mobilen Anwendungen ausgelegt und dementsprechend angepasst ist. Dies bedeutet insbesondere, dass es transportabel ist (ggf. in einem Fahrzeug fest eingebaut oder lediglich für den Transport darin untergebracht) und nicht ausschließlich für einen dauerhaften, stationären Einsatz, wie es beispielsweise bei der Beheizung eines Gebäudes der Fall ist, ausgelegt ist. Dabei kann das mobile Heizgerät auch fest in einem Fahrzeug (Landfahrzeug, Schiff, etc.), insbesondere in einem Landfahrzeug, installiert sein. Insbesondere kann es zur Beheizung eines Fahrzeug-Innenraums, wie beispielsweise eines Land-, Wasser- oder Luftfahrzeugs, sowie eines teiloffenen Raumes, wie er beispielsweise auf Schiffen, insbesondere Yachten, aufzufinden ist, ausgelegt sein. Das mobile Heizgerät kann auch vorübergehend stationär eingesetzt werden, wie beispielsweise in großen Zelten, Containern (zum Beispiel Baucontainern), etc. Insbesondere kann das mobile Heizgerät als Standheizung oder Zusatzheizung für ein Landfahrzeug, wie beispielsweise für einen Wohnwagen, ein Wohnmobil, einen Bus, einen Pkw, etc., ausgelegt sein.

Um eine unerwünschte Geräuschbelästigung durch die von einem solchen mobilen Heizgerät abströmenden Abgase zu vermeiden, ist es bekannt, in einer Abgasleitung des mobilen Heizgeräts einen Schalldämpfer anzuordnen. Bei bekannten mobilen Heizgeräten wird der Schalldämpfer üblicherweise z.B. über Klemmschellen mit flexiblen Abgasrohrstücken verbunden (vor allem im Fall einer Nachrüstung) oder bei starren Abgasrohranordnungen, wie sie insbesondere als Erstausrüstung zum Einsatz kommen, werden gebogene biegesteife Abgasrohrstücke mit der Eingangsseite und der Ausgangsseite des Schalldämpfers verschweißt.

Aus der WO 2012/149537 A1 ist ein Schalldämpfersystem bekannt, bei dem ein oder mehrere Abgasrohr(e) vorgesehen ist/sind, wobei mindestens ein Abgasrohr eine Vielzahl an Durchgangslöchern aufweist. Ein oder mehrere Adapter ist/sind an mindestens einem Abgasrohr befestigt. Ein Polymergehäuse ist wiederum an den Adaptern befestigt und umgibt die Vielzahl an Durchgangslöchern. In der DE 10 2011 051 057 A1 ist ein Verfahren zur Herstellung von Rohren für Abgasanlagen von Kraftfahrzeugen durch Rundbiegen und Längsschweißen beschrieben.

Es ist Aufgabe der vorliegenden Erfindung, eine verbesserte Heizgerät-Abgasrohranordnung und ein verbessertes mobiles, brennstoffbetriebenes Heizgerät bereitzustellen.

Die Aufgabe wird durch eine Heizgerät-Abgasrohranordnung mit integriertem Schalldämpfer nach Anspruch 1 gelöst. Vorteilhafte Weiterbildungen sind in den abhängigen Ansprüchen angegeben.

Die Heizgerät-Abgasrohranordnung mit integriertem Schalldämpfer weist ein aus einem gelochten Metallblech durch Rundbiegen und Längsschweißen gefertiges biegesteifes Abgasrohr, das einen ungelochten gekrümmten ersten Rohrabschnitt, einen ungelochten zweiten Rohrabschnitt und einen einstückig mit dem ersten Rohrabschnitt und dem zweiten Rohrabschnitt ausgebildeten gelochten Schalldämpferabschnitt zwischen dem ersten Rohrabschnitt und dem zweiten Rohrabschnitt aufweist, und ein den gelochten Schalldämpferabschnitt außenseitig überdeckendes Schalldämpfergehäuse, das derart angeordnet ist, dass sich der erste Rohrabschnitt und der zweite Rohrabschnitt jeweils zumindest überwiegend außerhalb des Schalldämpfergehäuses erstrecken, auf.

Da der Schalldämpfer in die Heizgerät-Abgasrohranordnung integriert ist, ist der Schalldämpfer somit unmittelbar als Teil des Abgasrohres ausgebildet und er muss nicht separat mit Abgasrohrstücken verbunden werden, was einen erheblich reduzierten Montageaufwand zur Folge hat. Da das Abgasrohr, das den Schalldämpferabschnitt aufweist, durch Rundbiegen und Längsschweißen aus einem gelochten Metallblech gefertigt ist, ist ferner eine besonders kostengünstige Herstellung möglich. Insbesondere können die Löcher für den Schalldämpferabschnitt kostengünstig vor dem Rundbiegen und Längsschweißen zu der Rohrform in dem Metallblech gebildet werden, z.B. durch Stanzen. Durch die einstückige Ausbildung des Abgasrohres, das den ungelochten gekrümmten ersten Rohrabschnitt, den ungelochten zweiten Rohrabschnitt und den Schalldämpferabschnitt aufweist, kann die gesamte Baugruppe, d.h. die Heizgerät-Abgasrohranordnung, aus Schalldämpfer und den Abgasrohrabschnitten vor und nach dem Schalldämpfer sehr kostengünstig produziert werden. Bevorzugt kann auch der ungelochte zweite Rohrabschnitt gekrümmt ausgebildet sein. Ferner wird in dieser Weise verglichen mit einer separaten Ausgestaltung von Schalldämpfer und mit diesem verbundenen Abgasrohrstücken eine deutlich kompaktere Ausgestaltung erzielt und die resultierenden Toleranzen können verringert werden. Aufgrund der biegesteifen Ausbildung des Abgasrohres mit dem integrierten Schalldämpfer wird dabei eine selbsttragende Konstruktion bereitgestellt, die besonders einfach zu montieren ist. Da zumindest der erste Rohrabschnitt gekrümmt ist, ist eine Befestigung an einem mobilen, brennstoffbetriebenen Heizgerät ferner auch bei schwierigen Einbauverhältnissen ohne zusätzliche Krümmerelemente ermöglicht. Dies gilt insbesondere in noch größerem Maße, wenn auch der ungelochte zweite Rohrabschnitt gekrümmt ist.

Gemäß einer Weiterbildung erstreckt sich der gelochte Schalldämpferabschnitt über höchstens 40 % der Gesamtlänge des Abgasrohres. Bevorzugt erstreckt sich der gelochte Schalldämmpferabschnitt über höchstens 35 % der Gesamtlänge des Abgasrohres. In diesem Fall weisen die ungelochten gekrümmten Rohrabschnitte eine Länge auf, die eine zuverlässige Montage ohne weitere Zwischenstücke auch bei schwierigen Einbauverhältnissen ermöglicht. Unter der Länge des Abgasrohres bzw. der einzelnen Abschnitte des Abgasrohres wird dabei die Länge Strömungsweges gemessen in der Rohrmitte verstanden.

Gemäß einer Weiterbildung hat zumindest einer von dem gekrümmten ersten Rohrabschnitt und dem zweiten Rohrabschnitt eine Länge von zumindest 80 % der Länge des gelochten Schalldämpferabschnitts. In diesem Fall hat der erste Rohrabschnitt und/oder der zweite Rohrabschnitt eine Länge, die eine zuverlässige Montage der Heizgerät-Abgasrohranordnung ohne weitere Zwischenstücke an einem mobilen, brennstoffbetriebenen Heizgerät ermöglicht. Bevorzugt weisen der gekrümmte erste Rohrabschnitt und der zweite Rohrabschnitt jeweils eine Länge von zumindest 50 % der Länge des gelochten Schalldämpferabschnitts auf.

Gemäß einer Weiterbildung weist zumindest der gekrümmte erste Rohrabschnitt eine Krümmung > 90° auf, bevorzugt eine Krümmung > 120°. Unter der Krümmung wird dabei die Krümmung gemessen in der Erstreckungsrichtung des Abgasrohres verstanden. Bei einer derart großen Krümmung des gekrümmten Rohrabschnitts ist auch bei einem sehr kleinen zur Verfügung stehenden Bauvolumen eine Montage der Heizgerät-Abgasrohranordnung ermöglicht. Bevorzugt kann auch der zweite Rohrabschnitt eine solche Krümmung aufweisen. Bevorzugt ist das Schalldämpfergehäuse mit der Außenseite des Abgasrohres verschweißt. Insbesondere kann das Schalldämpfergehäuse in einfacher und kostengünstiger Weise durch Punktschweißen mit dem Schalldämpferabschnitt oder einem unmittelbar daran anschließenden Bereich des ersten ungelochten Rohrabschnitts und/oder des zweiten ungelochten Rohrabschnitts verbunden sein.

Wenn das Schalldämpfergehäuse zwei identisch ausgebildete Halbschalen aufweist, ist eine besonders kostengünstige Herstellung ermöglicht, bei der die Halbschalen in großen Stückzahlen hergestellt werden können und die Montage sehr einfach ist.

Gemäß einer Weiterbildung ist zwischen der Innenseite des Schalldämpfergehäuses und der Außenseite des gelochten Schalldämpferabschnitts ein geräuschabsorbierendes Dämmmaterial angeordnet, um eine möglichst gute Dämpfung von Geräuschen zu erzielen. Das Dämmmaterial kann dabei bevorzugt Mineralwolle und/oder Glaswolle aufweisen, insbesondere durch Mineralwolle und/oder Glaswolle gebildet sein.

Bevorzugt ist das Abgasrohr aus einem temperaturbeständigen Stahlblech gefertigt. In diesem Fall ist eine besonders kostengünstige Herstellung in einfacher Weise ermöglicht. Alternativ ist z.B. auch eine Herstellung aus anderen Materialien, wie insbesondere Aluminium oder einer Aluminiumlegierung, möglich.

Die Aufgabe wird auch durch ein mobiles, brennstoffbetriebenes Heizgerät mit einer solchen Heizgerät-Abgasrohranordnung nach Anspruch 11 gelöst.

Die Aufgabe wird auch durch ein Verfahren zum Herstellen einer Heizgerät-Abgasrohranordnung mit integriertem Schalldämpfer nach Anspruch 12 gelöst. Vorteilhafte Weiterbildungen sind in den abhängigen Ansprüchen angegeben.

Das Verfahren weist die Schritte auf:
- Ausbilden eines biegesteifen Rohres mit einem ersten ungelochten Rohrabschnitt, einem zweiten ungelochten Rohrabschnitt und einem dazwischen angeordneten gelochten Schalldämpferabschnitt durch Rundbiegen und Längsschweißen eines bereichsweise gelochten Metallblechs;
- Inelastisches Umformen zumindest des ersten ungelochten Rohrabschnitts unter Ausbildung eines biegesteifen Abgasrohres mit einem ungelochten gekrümmten ersten Rohrabschnitt, einem ungelochten zweiten Rohrabschnitt und einem dazwischen befindlichen gelochten Schalldämpferabschnitt,
- Befestigen eines Schalldämpfergehäuses im Bereich des gelochten Schalldämpferabschnitts derart, dass sich der ungelochte gekrümmte erste Rohrabschnitt und der ungelochte zweite Rohrabschnitt zumindest überwiegend außerhalb des Schalldämpfergehäuses erstrecken.

Mit dem Verfahren werden die zuvor im Hinblick auf die Heizgerät-Abgasrohranordnung mit integriertem Schalldämpfer beschriebenen Vorteile erreicht. Da mit dem Verfahren ein in die Heizgerät-Abgasrohranordnung integrierter Schalldämpfer erzeugt wird, ist der Schalldämpfer somit unmittelbar als Teil des Abgasrohres ausgebildet und er muss nicht separat mit Abgasrohrstücken verbunden werden, was einen erheblich reduzierten Montageaufwand zur Folge hat. Da das Abgasrohr, das den Schalldämpferabschnitt aufweist, durch Rundbiegen und Längsschweißen aus einem gelochten Metallblech gefertigt wird, ist die Herstellung besonders kostengünstig. Insbesondere können die Löcher für den Schalldämpferabschnitt kostengünstig vor dem Rundbiegen und Längsschweißen zu der Rohrform in dem Metallblech gebildet werden, z.B. durch Stanzen. Durch die einstückige Ausbildung des Abgasrohres, das den ungelochten gekrümmten ersten Rohrabschnitt, den ungelochten zweiten Rohrabschnitt und den Schalldämpferabschnitt aufweist, wird verglichen mit einer separaten Ausgestaltung von Schalldämpfer und mit diesem verbundenen Abgasrohrstücken eine deutlich kompaktere Ausgestaltung erzielt und die resultierenden Toleranzen können verringert werden. Bevorzugt kann auch ein inelastisches Umformen des zweiten ungelochten Rohrabschnitts unter Ausbildung eines ungelochten gekrümmten zweiten Rohrabschnitts erfolgen. Aufgrund der biegesteifen Ausbildung des Abgasrohres mit dem integrierten Schalldämpfer wird dabei eine selbsttragende Konstruktion bereitgestellt, die besonders einfach zu montieren ist. Da der erste Rohrabschnitt gekrümmt ist, ist eine Befestigung an einem mobilen, brennstoffbetriebenen Heizgerät ferner auch bei schwierigen Einbauverhältnissen ohne zusätzliche Krümmerelemente ermöglicht. Insbesondere wenn auch der zweite Rohrabschnitt gekrümmt ist, wird dies noch besser erreicht.

Gemäß einer Weiterbildung erfolgt ein Verschweißen des Schalldämpfergehäuses mit dem Abgasrohr. Das Verschweißen kann dabei insbesondere in einfacher und kostengünstiger Weise durch Punktschweißen erfolgen. Das Schalldämpfergehäuse kann insbesondere mit dem Schalldämpferabschnitt oder einem unmittelbar daran anschließenden Bereich des ersten und/oder zweiten Rohrabschnitts verschweißt werden.

Gemäß einer Weiterbildung erfolgt ein Einfüllen eines schallabsorbierenden Dämmmaterials zwischen einer Innenseite des Schalldämpfergehäuses und einer Außenseite des gelochten Schalldämpferabschnitts. Das Einfüllen des schallabsorbierenden Dämmmaterials sollte dabei insbesondere vor dem Verschweißen des Schalldämpfergehäuses erfolgen.

Weitere Vorteile und Weiterbildungen ergeben sich aus der nachfolgenden Beschreibung eines Ausführungsbeispiels unter Bezugnahme auf die beigefügten Zeichnungen.
- Fig. 1: ist eine schematische Darstellung eines bereichsweise gelochten Metallblechs, wie es bei dem erfindungsgemäßen Verfahren zur Anwendung kommt.
- Fig. 2: ist eine schematische Darstellung eines aus dem gelochten Metallblech von Fig. 1 durch Rundbiegen und Längsschweißen gefertigten biegesteifen Metallrohres mit einem ersten ungelochten Rohrabschnitt, einem zweiten ungelochten Rohrabschnitt und einem dazwischen angeordneten gelochten Schalldämpferabschnitt.
- Fig. 3: ist eine schematische Darstellung eines biegesteifen Abgasrohres gemäß der Ausführungsform.
- Fig. 4: ist eine schematische Darstellung des biegesteifen Abgasrohres mit einer Halbschale eines Schalldämpfergehäuses.
- Fig. 5: ist eine schematische Darstellung des Abgasrohres mit einem daran befestigten Schalldämpfergehäuse.
- Fig. 6: ist eine schematische Schnittdarstellung einer Heizgerät-Abgasrohranordnung mit integriertem Schalldämpfer gemäß der Ausführungsform.
- Fig. 7: ist eine schematische perspektivische Darstellung der Heizgerät-Abgasrohranordnung.

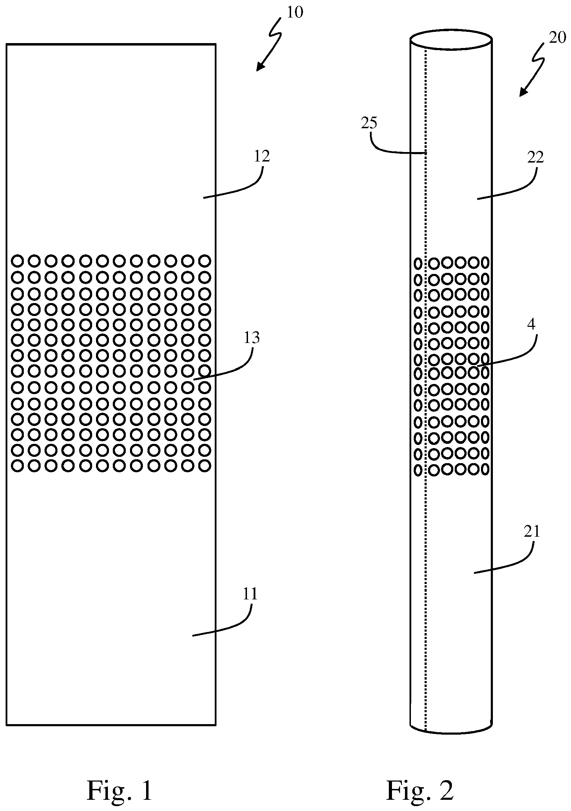

Eine Ausführungsform der Heizgerät-Abgasrohranordnung 100 mit integriertem Schalldämpfer wird im Folgenden unter Bezugnahme auf die Fig. 1 bis Fig. 7 beschrieben.

Die Heizgerät-Abgasrohranordnung 100 gemäß der Ausführungsform ist speziell für ein mobiles, brennstoffbetriebenes Heizgerät ausgelegt, insbesondere für ein Fahrzeug-Heizgerät wie es z.B. typischerweise in einer Stand- oder Zusatzheizung zum Einsatz kommt.

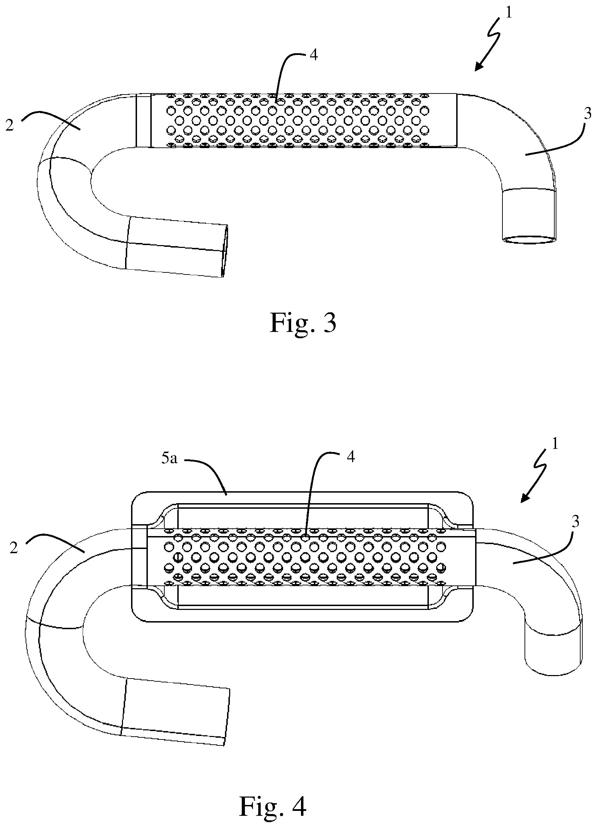

Die Heizgerät-Abgasrohranordnung 100 mit integriertem Schalldämpfer weist ein biegefestes Abgasrohr 1 auf, wie in Fig. 3 darstellt. Das Abgasrohr 1 ist aus Metall gebildet, bei der konkret dargestellten Ausführungsform insbesondere aus Stahlblech einer temperaturbeständigen Stahlsorte. Das Abgasrohr 1 weist einen gekrümmten ersten Rohrabschnitt 2, einen gekrümmten zweiten Rohrabschnitt 3 und einen zwischen dem gekrümmten ersten Rohrabschnitt 2 und dem gekrümmten zweiten Rohrabschnitt 3 ausgebildeten Schalldämpferabschnitt 4 auf. Der Schalldämpferabschnitt 4 ist dabei einstückig mit dem gekrümmten ersten Rohrabschnitt 2 und den gekrümmten zweiten Rohrabschnitt 3 aus dem Metallblech gebildet. In dem Schalldämpferabschnitt 4 ist die Wand des Abgasrohres 1 gelocht, wohingegen der gekrümmte erste Rohrabschnitt 2 und der gekrümmte zweite Rohrabschnitt 3 ungelocht, also mit einer geschlossenen Rohrwand ausgebildet sind. In dem gelochten Schalldämpferabschnitt 4 ist die Wand des Abgasrohres 1 mit einer Vielzahl von Löchern versehen, die die Innenseite des Schalldämpferabschnitts 4 mit der Außenseite des Schalldämpferabschnitts 4 verbinden.

Der ungelochte gekrümmte erste Rohrabschnitt 2 und der ungelochte gekrümmte zweite Rohrabschnitt 3 erstrecken sich jeweils über eine Rohrlänge (gemessen als der ausgebildete Strömungsweg im Rohrzentrum) die zumindest 50 % der Länge des gelochten Schalldämpferabschnitts 4 beträgt. Bei dem konkret dargestellten Ausführungsbeispiel erstreckt sich der ungelochte gekrümmte erste Rohrabschnitt 3 über eine Länge, die in etwa der Länge des Schalldämpferabschnitts entspricht und der ungelochte gekrümmte zweite Rohrabschnitt 3 erstreckt, somit über mehr als 80 % der Länge des Schalldämpferabschnitts 4. Zusammen bilden der ungelochte gekrümmte erste Rohrabschnitt 2 und der ungelochte gekrümmte zweite Rohrabschnitt einen größeren Teil der Länge des Abgasrohres 1 aus, als der gelochte Schalldämpferabschnitt 4.

Bei der dargestellten Ausführungsform ist der ungelochte gekrümmte zweite Rohrabschnitt 3 z.B. mit einer Krümmung von etwa 90° versehen und der ungelochte gekrümmte erste Rohrabschnitt 2 ist mit einer deutlich größeren Krümmung versehen, insbesondere einer Krümmung > 120°, im konkret dargestellten Ausführungsbeispiel sogar eine Krümmung von über 160°. Der gelochte Schalldämpferabschnitt 4 erstreckt sich hingegen bei der Ausführungsform zumindest im Wesentlichen linear, ist also nicht gekrümmt ausgebildet.

Das den ungelochten gekrümmten ersten Rohrabschnitt 2, den gelochten Schalldämpferabschnitt 4 und den ungelochten gekrümmten zweiten Rohrabschnitt 3 aufweisende Abgasrohr 1 ist biegesteif ausgeführt, sodass es selbsttragend ist, d.h. sich nicht verformt, wenn es z.B. nur an einem oder wenigen Punkten befestigt wird. Das Abgasrohr 1 ist durch Rundbiegen und Längsschweißen aus einem ebenen Metallblech 10 gebildet, das einen ungelochten ersten Abschnitt 11, einen ungelochten zweiten Abschnitt 12 und einen dazwischen befindlichen gelochten Abschnitt 13 aufweist, wie es z.B. schematisch in Fig. 1 dargestellt ist. Die Löcher in dem gelochten Abschnitt 13 können insbesondere durch Stanzen in dem Metallblech 10 ausgebildet sein, was eine besonders kostengünstige Fertigung ermöglicht. Das durch Rundbiegen und Längsschweißen erzeugte biegesteife Rohr 20 ist schematisch in Fig. 2 dargestellt. Wie in Fig. 2 schematisch dargestellt ist, ist weist das biegesteife Rohr 20 eine in der Längsrichtung des Rohres 20 verlaufende Schweißnaht 25 auf, die in Fig. 2 gestrichelt dargestellt ist. Es ist zu beachten, dass es sich bei den Fig. 1 und Fig. 2 lediglich um schematische Darstellungen handelt und die Länge der ungelochten Abschnitte 11 und 12 sowie des gelochten Abschnitts 13 des Metallblechs 10 aufgrund der schematischen Darstellung nicht völlig mit den jeweiligen Längen des in den Fig. 3 bis Fig. 7 dargestellten Abgasrohres 1 übereinstimmen. Wie in Fig. 2 zu sehen ist, weist das gebildete biegesteife Rohr 20 einen ungelochten ersten Rohrabschnitt 21, einen ungelochten zweiten Rohrabschnitt 22 und den dazwischen befindlichen Schalldämpferabschnitt 4 auf.

Das in Fig. 3 dargestellte biegesteife Abgasrohr 1 ist durch inelastisches Umformen des biegesteifen Rohres 2 gebildet. Dabei sind der ungelochte gekrümmte erste Rohrabschnitt 2 und der ungelochte gekrümmte zweite Rohrabschnitt 3 durch Biegen der ungelochten Rohrabschnitte 21 und 22 mit einer üblichen Rohrbiegevorrichtung gebildet. Zur Erzeugung des biegesteifen Abgasrohres 1 können das freie Ende des ungelochten gekrümmten ersten Rohrabschnitts 2 und/oder das freie Ende des ungelochten gekrümmten zweiten Rohrabschnitts 3 insbesondere auch noch auf die geforderte Länge zugeschnitten sein.

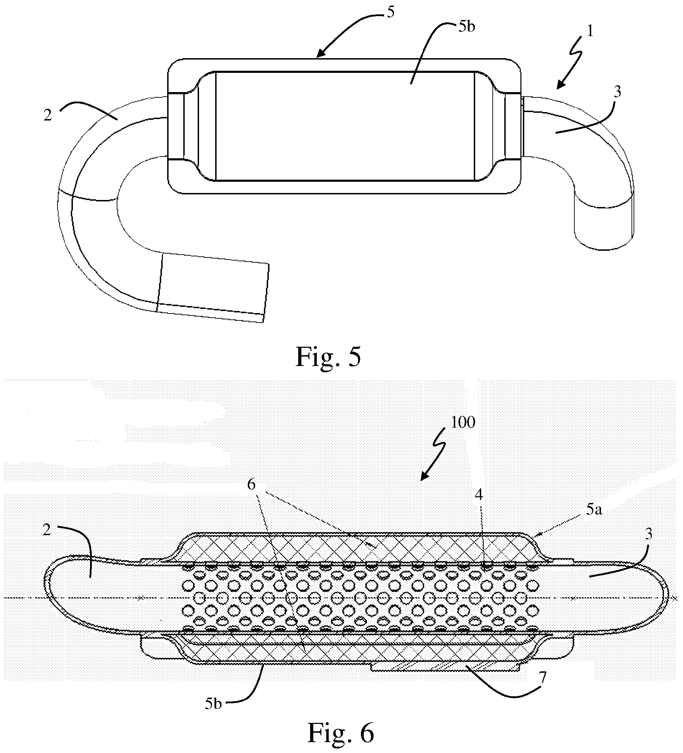

Zum Ausbilden der Heizgerät-Abgasrohranordnung 100 gemäß der Ausführungsform wird das biegesteife Abgasrohr 1 mit einem Schalldämpfergehäuse 5 versehen. Bei der Ausführungsform weist das Schalldämpfergehäuse 5 zwei identisch zueinander ausgebildete Halbschalen 5a, 5b auf, was eine besonders kostengünstige Herstellung ermöglicht. Auch das Schalldämpfergehäuse 5 ist bei der Ausführungsform aus Metallblech gebildet, insbesondere aus Stahlblech. Die Halbschalen 5a, 5b des Schalldämpfergehäuses 5 können dabei insbesondere durch Umformen aus dem Metallblech gebildet sein. Die Halbschalen 5a, 5b des Schalldämpfergehäuses 5 werden derart an dem biegesteifen Abgasrohr 1 angeordnet, dass das Schalldämpfergehäuse 5 den gelochten Schalldämpferabschnitt 4 überdeckt. Dabei umgreift das Schalldämpfergehäuse 5 den gesamten Außenumfang des Schalldämpferabschnitts 4 sodass zwischen der Außenseite des gelochten Schalldämpferabschnitts 4 und der Innenseite des Schalldämpfergehäuses 5 ein Zwischenraum ausgebildet ist, wie insbesondere in der schematischen Schnittdarstellung von Fig. 6 zu sehen ist. In dem Zwischenraum ist ein geräuschabsorbierendes Dämmmaterial 6 angeordnet, das bei der Ausführungsform insbesondere durch Mineralwolle gebildet ist. Alternativ oder zusätzlich kann als Dämmmaterial insbesondere auch Glaswolle zum Einsatz kommen. Es können aber auch andere temperatur- und umweltbeständige faserige Materialien verwendet werden.

Das Schalldämpfergehäuse 5 ist durch Verschweißen mit der Außenseite des biegesteifen Abgasrohres 1 verbunden. Das Schalldämpfergehäuse 5 ist derart bemessen, dass sich sowohl der ungelochte gekrümmte erste Rohrabschnitt 2 als auch der ungelochte gekrümmte zweite Rohrabschnitt 3 jeweils zumindest überwiegend außerhalb des Schalldämpfergehäuses 5 erstrecken. Der ungelochte gekrümmte erste Rohrabschnitt 2 und der ungelochte gekrümmte zweite Rohrabschnitt 3 bilden somit nicht nur aus dem Schalldämpfergehäuse 5 ragende Anschlussstutzen für Teilstücke eines Abgasrohres, sondern bilden jeweils selbst Teilstücke des Abgasrohres. Das Schalldämpfergehäuse 5 ist an dem Schalldämpferabschnitt 4 oder unmittelbar daran anschließenden Bereichen des ungelochten gekrümmten ersten Rohrabschnitts 2 und/oder des ungelochten gekrümmten zweiten Rohrabschnitts 3 angeschweißt. Die Schweißverbindung zwischen dem Schalldämpfergehäuse 5 und dem Abgasrohr 1 kann dabei insbesondere in einfacher und kostengünstiger Weise durch Punktschweißen ausgebildet sein.

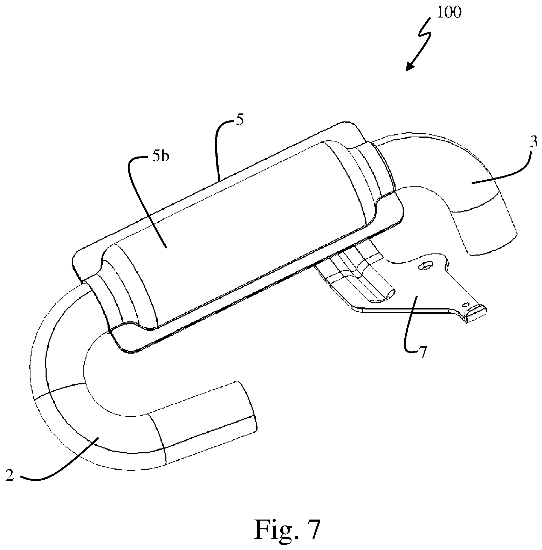

Bei der Ausführungsform weist die Heizgerät-Abgasrohranordnung 100 mit integriertem Schalldämpfer ferner eine Halterung 7 zum Befestigen der Heizgerät-Abgasrohranordnung 100 auf, wie in Fig. 6 und Fig. 7 zu sehen ist. Die Halterung 7 ist ebenfalls aus Metallblech ausgebildet und durch Verschweißen mit dem Schalldämpfergehäuse 5 verbunden. Aufgrund der biegesteifen Ausbildung des Abgasrohres 1 kann die Heizgerät-Abgasrohranordnung z.B. lediglich über die Halterung 7 befestigt werden und die Heizgerät-Abgasrohranordnung 100 ist selbsttragend gehalten, insbesondere ist verhindert, dass sich der ungelochte gekrümmte erste Rohrabschnitt 2 oder der ungelochte gekrümmte zweite Rohrabschnitt 3 relativ zu dem durch den Schalldämpferabschnitt 4 und das Schalldämpfergehäuse 5 gebildeten integrierten Schalldämpfer bewegen. In dieser Weise wirken keine hohen Kräfte auf die Schweißverbindung zwischen dem Abgasrohr 1 und dem Schalldämpfergehäuse 5, sodass diese Verbindung sehr stabil und langlebig ist.

Da der Schalldämpferabschnitt 4 als Teil des Abgasrohres 1 ausgebildet ist, kann das Abgasrohr 1 unmittelbar angrenzend an das Schalldämpfergehäuse 5 gekrümmt ausgebildet werden, sodass verglichen mit einer separaten Ausbildung eines Schalldämpfers und daran über z.B. Stutzen befestigten Abgasrohr-Teilstücken eine deutlich kompaktere Ausgestaltung ermöglicht ist.

Bei einem Verfahren zum Herstellen der Heizgerät-Abgasrohranordnung 100 gemäß der Ausführungsform wird ein biegesteifes Rohres 20 mit einem ersten ungelochten Rohrabschnitt 21, einem zweiten ungelochten Rohrabschnitt 22 und einem dazwischen angeordneten gelochten Schalldämpferabschnitt 4, wie es schematisch in Fig. 2 dargestellt ist, durch Rundbiegen und Längsschweißen eines bereichsweise gelochten Metallblechs 10 gebildet, das schematisch in Fig. 1 dargestellt ist.

Anschließend werden der erste ungelochte Rohrabschnitt 21 und der zweite ungelochte Rohrabschnitt 22 inelastisch umgeformt, was z.B. in einer üblichen Rohrbiegevorrichtung erfolgt. In dieser Weise wir das biegesteife Abgasrohr 1 mit dem ungelochten gekrümmten ersten Rohrabschnitt 2, dem ungelochten gekrümmten zweiten Rohrabschnitt 3 und dem dazwischen befindlichen gelochten Schalldämpferabschnitt 4 ausgebildet, das schematisch in Fig. 3 dargestellt ist.

Anschließend wird das Schalldämpfergehäuse 5 im Bereich des gelochten Schalldämpferabschnitts 4 derart an dem Abgasrohr 1 befestigt, dass sich der ungelochte gekrümmte erste Rohrabschnitt 2 und der ungelochte gekrümmte zweite Rohrabschnitt 3 zumindest überwiegend außerhalb des Schalldämpfergehäuses 5 erstrecken. Das Befestigen erfolgt bei dem Ausführungsbeispiel dabei insbesondere über Verschweißen, insbesondere durch Punktschweißen. Vor oder bei dem Befestigen des Schalldämpfergehäuses 5 wird das schallabsorbierende Dämmmaterial 6 zwischen der Innenseite des Schalldämpfergehäuses 5 und der Außenseite des gelochten Schalldämpferabschnitts 4 angeordnet. Die Halterung 7 kann z.B. bereits vor dem Befestigen des Schalldämpfergehäuses 5 mit einer der beiden Halbschalen 5a, 5b verbunden werden oder aber auch erst nach dem Befestigen des Schalldämpfergehäuses 5 an dem biegesteifen Abgasrohr 1. Auch das Befestigen der Halterung 7 kann bevorzugt über Punktschweißen erfolgen.

## Patentansprüche

1. Heizgerät-Abgasrohranordnung mit integriertem Schalldämpfer, aufweisend:
ein aus einem bereichsweise gelochten Metallblech durch Rundbiegen und Längsschweißen gefertigtes biegesteifes Abgasrohr (1), das einen ungelochten gekrümmten ersten Rohrabschnitt (2), einen ungelochten zweiten Rohrabschnitt (3) und einen einstückig mit dem ersten Rohrabschnitt (2) und dem zweiten Rohrabschnitt (3) ausgebildeten gelochten Schalldämpferabschnitt (4) zwischen dem ersten Rohrabschnitt (2) und dem zweiten Rohrabschnitt (3) aufweist, und
ein den gelochten Schalldämpferabschnitt (4) außenseitig überdeckendes Schalldämpfergehäuse (5), das derart angeordnet ist, dass sich der erste Rohrabschnitt (2) und der zweite Rohrabschnitt (3) jeweils zumindest überwiegend außerhalb des Schalldämpfergehäuses (5) erstrecken.

2. Heizgerät-Abgasrohranordnung nach Anspruch 1, wobei sich der gelochte Schalldämpferabschnitt (4) über höchstens 40 % der Gesamtlänge des Abgasrohres (1) erstreckt, bevorzugt über höchstens 35 % der Gesamtlänge des Abgasrohres (1).

3. Heizgerät-Abgasrohranordnung nach Anspruch 1 oder 2, wobei zumindest einer von dem gekrümmten ersten Rohrabschnitt (2) und dem zweiten Rohrabschnitt (3) eine Länge von zumindest 80 % der Länge des gelochten Schalldämpferabschnitts (4) hat.

4. Heizgerät-Abgasrohranordnung nach einem der vorangehenden Ansprüche, wobei der gekrümmte erste Rohrabschnitt (2) und der zweite Rohrabschnitt (3) jeweils eine Länge von zumindest 50 % der Länge des gelochten Schalldämpferabschnitts (4) aufweisen.

5. Heizgerät-Abgasrohranordnung nach einem der vorangehenden Ansprüche, wobei zumindest der gekrümmte erste Rohrabschnitt (2) eine Krümmung > 90° aufweist, bevorzugt > 120°.

6. Heizgerät-Abgasrohranordnung nach einem der vorangehenden Ansprüche, wobei das Schalldämpfergehäuse (5) mit der Außenseite des Abgasrohres (1) verschweißt ist.

7. Heizgerät-Abgasrohranordnung nach einem der vorangehenden Ansprüche, wobei das Schalldämpfergehäuse (5) zwei identisch ausgebildete Halbschalen (5a, 5b) aufweist.

8. Heizgerät-Abgasrohranordnung nach einem der vorangehenden Ansprüche, wobei zwischen der Innenseite des Schalldämpfergehäuses (5) und der Außenseite des gelochten Schalldämpferabschnitts (4) ein geräuschabsorbierendes Dämmmaterial (6) angeordnet ist.

9. Heizgerät-Abgasrohranordnung nach Anspruch 8, wobei das Dämmmaterial (6) Mineralwolle und/oder Glaswolle aufweist.

10. Heizgerät-Abgasrohranordnung nach einem der vorangehenden Ansprüche, wobei das Abgasrohr (1) aus einem temperaturbeständigen Stahlblech gefertigt ist.

11. Mobiles, brennstoffbetriebenes Heizgerät mit einer Heizgerät-Abgasrohranordnung nach einem der vorangehenden Ansprüche.

12. Verfahren zum Herstellen einer Heizgerät-Abgasrohranordnung mit integriertem Schalldämpfer aufweisend die Schritte:
- Ausbilden eines biegesteifen Rohres (20) mit einem ersten ungelochten Rohrabschnitt (21), einem zweiten ungelochten Rohrabschnitt (22) und einem dazwischen angeordneten gelochten Schalldämpferabschnitt (4) durch Rundbiegen und Längsschweißen eines bereichsweise gelochten Metallblechs (10);
- Inelastisches Umformen zumindest des ersten ungelochten Rohrabschnitts (21) unter Ausbildung eines biegesteifen Abgasrohres (1) mit einem ungelochten gekrümmten ersten Rohrabschnitt (2), einem ungelochten zweiten Rohrabschnitt (3) und einem dazwischen befindlichen gelochten Schalldämpferabschnitt (4),
- Befestigen eines Schalldämpfergehäuses (5) im Bereich des gelochten Schalldämpferabschnitts (4) derart, dass sich der ungelochte gekrümmte erste Rohrabschnitt (2) und der ungelochte zweite Rohrabschnitt (3) zumindest überwiegend außerhalb des Schalldämpfergehäuses (5) erstrecken.

13. Verfahren nach Anspruch 12 mit dem Schritt:
- Verschweißen des Schalldämpfergehäuses (5) mit dem Abgasrohr (1).

14. Verfahren nach Anspruch 12 oder 13 mit dem Schritt:
- Einfüllen eines schallabsorbierenden Dämmmaterials (6) zwischen einer Innenseite des Schalldämpfergehäuses (5) und einer Außenseite des gelochten Schalldämpferabschnitts (4).

## Claims

1. A heating device exhaust pipe arrangement with an integrated muffler, having:
a flexurally stiff exhaust pipe (1), which is manufactured from a regionally perforated metal sheet by round bending and longitudinal welding and has an unperforated curved first pipe section (2), an unperforated second pipe section (3) and, formed integrally with the first pipe section (2) and the second pipe section (3), a perforated muffler section (4) between the first pipe section (2) and the second pipe section (3), and
a muffler housing (5), which covers the exterior of the perforated muffler section (4) and is arranged in such a way that the first pipe section (2) and the second pipe section (3) each extend at least predominantly outside the muffler housing (5) .

2. The heating device exhaust pipe arrangement as claimed in claim 1, wherein the perforated muffler section (4) extends over at most 40% of the total length of the exhaust pipe (1), preferably over at most 35% of the total length of the exhaust pipe (1) .

3. The heating device exhaust pipe arrangement as claimed in claim 1 or 2, wherein at least one of the curved first pipe section (2) and the second pipe section (3) has a length of at least 80% of the length of the perforated muffler section (4).

4. The heating device exhaust pipe arrangement as claimed in one of the preceding claims, wherein the curved first pipe section (2) and the second pipe section (3) each have a length of at least 50% of the length of the perforated muffler section (4).

5. The heating device exhaust pipe arrangement as claimed in one of the preceding claims, wherein at least the curved first pipe section (2) has a curvature > 90°, preferably > 120°.

6. The heating device exhaust pipe arrangement as claimed in one of the preceding claims, wherein the muffler housing (5) is welded to the outside of the exhaust pipe (1).

7. The heating device exhaust pipe arrangement as claimed in one of the preceding claims, wherein the muffler housing (5) has two half shells (5a, 5b) of identical design.

8. The heating device exhaust pipe arrangement as claimed in one of the preceding claims, wherein a noise-absorbing insulating material (6) is arranged between the inside of the muffler housing (5) and the outside of the perforated muffler section (4).

9. The heating device exhaust pipe arrangement as claimed in claim 8, wherein the insulating material (6) comprises mineral wool and/or glass wool.

10. The heating device exhaust pipe arrangement as claimed in one of the preceding claims, wherein the exhaust pipe (1) is manufactured from a temperature-stable steel sheet.

11. A mobile fuel-operated heating device having a heating device exhaust pipe arrangement as claimed in one of the preceding claims.

12. A method for producing a heating device exhaust pipe arrangement with an integrated muffler, comprising the following steps:
- formation of a flexurally stiff pipe (20) having a first unperforated pipe section (21), a second unperforated pipe section (22) and a perforated muffler section (4) arranged therebetween by round bending and longitudinal welding of a regionally perforated metal sheet (10);
- inelastic deforming at least of the first unperforated pipe section (21) to form a flexurally stiff exhaust pipe (1) having an unperforated curved first pipe section (2), an unperforated second pipe section (3) and a perforated muffler section (4) situated therebetween,
- securing a muffler housing (5) in the region of the perforated muffler section (4) in such a way that the unperforated curved first pipe section (2) and the unperforated second pipe section (3) extend at least predominantly outside the muffler housing (5).

13. The method as claimed in claim 12, comprising the following step:
- welding the muffler housing (5) to the exhaust pipe (1).

14. The method as claimed in claim 12 or 13, comprising the following step:
- introducing a sound-absorbing insulating material (6) between an inside of the muffler housing (5) and an outside of the perforated muffler section (4).

## Revendications

1. Arrangement de tuyau à fumées d'appareil de chauffage avec silencieux intégré, comprenant :
un tuyau à fumées (1) rigide à la flexion, fabriqué par cintrage et soudage longitudinal à partir d'une tôle métallique perforée dans certaines zones, lequel possède une première portion de tuyau (2) curviligne non perforée, une deuxième portion de tuyau (3) non perforée et une portion de silencieux (4) perforée, réalisée d'un seul tenant avec la première portion de tuyau (2) et la deuxième portion de tuyau (3), entre la première portion de tuyau (2) et la deuxième portion de tuyau (3), et
un boîtier de silencieux (5) qui recouvre la portion de silencieux (4) perforée du côté extérieur, lequel est disposé de telle sorte que la première portion de tuyau (2) et la deuxième portion de tuyau (3) s'étendent respectivement au moins principalement à l'extérieur du boîtier de silencieux (5).

2. Arrangement de tuyau à fumées d'appareil de chauffage selon la revendication 1, la portion de silencieux (4) perforée s'étendant au maximum sur 40 % de la longueur totale du tuyau à fumées (1), de préférence au maximum sur 35 % de la longueur totale du tuyau à fumées (1).

3. Arrangement de tuyau à fumées d'appareil de chauffage selon la revendication 1 ou 2, au moins l'une parmi la première portion de tuyau (2) curviligne et la deuxième portion de tuyau (3) possédant une longueur égale à au moins 80 % de la longueur de la portion de silencieux (4) perforée.

4. Arrangement de tuyau à fumées d'appareil de chauffage selon l'une des revendications précédentes, la première portion de tuyau (2) curviligne et la deuxième portion de tuyau (3) présentant respectivement une longueur égale à au moins 50 % de la longueur de la portion de silencieux (4) perforée.

5. Arrangement de tuyau à fumées d'appareil de chauffage selon l'une des revendications précédentes, au moins la première portion de tuyau (2) curviligne présentant une courbure > 90°, de préférence > 120°.

6. Arrangement de tuyau à fumées d'appareil de chauffage selon l'une des revendications précédentes, le boîtier de silencieux (5) étant soudé avec le côté extérieur du tuyau à fumées (1).

7. Arrangement de tuyau à fumées d'appareil de chauffage selon l'une des revendications précédentes, le boîtier de silencieux (5) possédant deux demi-coques (5a, 5b) de configuration identique.

8. Arrangement de tuyau à fumées d'appareil de chauffage selon l'une des revendications précédentes, un matériau isolant (6) amortissant les bruits étant disposé entre le côté intérieur du boîtier de silencieux (5) et le côté extérieur de la portion de silencieux (4) perforée.

9. Arrangement de tuyau à fumées d'appareil de chauffage selon la revendication 8, le matériau isolant (6) comportant de la laine de roche et/ou de la laine de verre.

10. Arrangement de tuyau à fumées d'appareil de chauffage selon l'une des revendications précédentes, le tuyau à fumées (1) étant fabriqué dans une tôle d'acier résistante à la chaleur.

11. Appareil de chauffage mobile fonctionnant avec un combustible, comprenant un arrangement de tuyau à fumées d'appareil de chauffage selon l'une des revendications précédentes.

12. Procédé de fabrication d'un arrangement de tuyau à fumées d'appareil de chauffage avec silencieux intégré, comprenant les étapes suivantes :
- formation d'un tuyau (20) rigide à la flexion comprenant une première portion de tuyau (21) non perforée, une deuxième portion de tuyau (22) non perforée et une portion de silencieux (4) perforée disposée entre celles-ci par cintrage et soudage longitudinal d'une tôle métallique (10) perforée dans certaines zones ;
- façonnage inélastique d'au moins la première portion de tuyau (21) non perforée en formant un tuyau à fumées (1) rigide à la flexion qui comporte une première portion de tuyau (2) curviligne non perforée, une deuxième portion de tuyau (3) non perforée et une portion de silencieux (4) perforée qui se trouve entre celles-ci,
- fixation d'un boîtier de silencieux (5) dans la zone de la portion de silencieux (4) perforée de telle sorte que la première portion de tuyau (2) curviligne non perforée et la deuxième portion de tuyau (3) non perforée s'étendent au moins principalement à l'extérieur du boîtier de silencieux (5).

13. Procédé selon la revendication 12, comprenant l'étape suivante :
- soudage du boîtier de silencieux (5) avec le tuyau à fumées (1).

14. Procédé selon la revendication 12 ou 13, comprenant l'étape suivante :
- remplissage avec un matériau isolant (6) amortissant les bruits de l'espace entre un côté intérieur du boîtier de silencieux (5) et un côté extérieur de la portion de silencieux (4) perforée.
